**Europäisches Patentamt**

**European Patent Office**

**Office européen des brevets**

(19)

(11) Veröffentlichungsnummer: **0 287 033 B1**

(12) **EUROPÄISCHE PATENTSCHRIFT**

(45) Veröffentlichungstag der Patentschrift:
**13.03.91 Patentblatt 91/11**

(51) Int. Cl.⁵: **B29C 47/08, B08B 3/12**

(21) Anmeldenummer: **88105811.9**

(22) Anmeldetag: **12.04.88**

(54) **Vorrichtung zum Reinigen solcher Teile von Kunststoffverarbeitungsmaschinen, an denen Kunststoffreste anhaften.**

(30) Priorität: **14.04.87 DE 3712640**

(43) Veröffentlichungstag der Anmeldung:
**19.10.88 Patentblatt 88/42**

(45) Bekanntmachung des Hinweises auf die
Patenterteilung:
**13.03.91 Patentblatt 91/11**

(84) Benannte Vertragsstaaten:
**AT BE CH FR GB IT LI NL SE**

(56) Entgegenhaltungen:
**DE-A- 3 146 478**
**US-A- 3 166 773**

(73) Patentinhaber: **Caroline Christ, abgasfreie**
**Werkzeugreinigungsapparate für die**
**Kunststoffindustrie**
**Elsenheimerstrasse 2 a**
**W-8000 München 21 (DE)**

(72) Erfinder: **Schmidt, Rudolf**
**Agnes-Bernauer-Strasse 69**
**W-8000 München 21 (DE)**

(74) Vertreter: **Prietsch, Reiner, Dipl.-Ing.**
**Patentanwälte Dipl.-Ing. Dipl. oec. publ. D.**
**Lewinsky, Dipl.-Ing. Reiner Prietsch**
**Gotthardstrasse 81**
**W-8000 München 21 (DE)**

**Beschreibung**

Die Erfindung betrifft eine Vorrichtung der im Oberbegriff des Patentanspruches 1 angegebenen Art.

Eine solche Vorrichtung ist aus der DE-PS 31 46 478 bekannt. Das mit ihr verwirklichte Reinigungsprinzip hat den Vorteil, daß im Regelfall und bei bestimmungsgemäßem Gebrauch der Kunststoff nicht zersetzt wird, so daß keine toxischen oder sonst die Umwelt schädigenden Gase entstehen, die eine stationäre Aufstellung der Vorrichtung und ihre Verbindung mit einem entsprechendem Abzugsystem notwendig machen würden. Da der Behandlungsbehälter durch den Deckel luftdicht abgeschlossen ist, muß dieser aus Sicherheitsgründen mit einem Überdruckventil versehen werden. Dieses Überdruckventil spricht u.a. an, wenn der Füllstand des Wärmeträgermediums in dem Behandlungsbehälter zu niedrig ist und daher während der Erwärmung der Druck des eingeschlossenen, entsprechend großen Luftvolumens über einen vorgegebenen Grenzwert steigt. Weiter spricht das Überdruckventil an, wenn die Behandlungstemperatur fehlerhaft auf einen über der Zersetzungstemperatur des betreffenden Kunststoffes liegenden Wert eingestellt ist. Schließlich können auch zusammen mit den zu reinigenden Werkzeugen Materialien unbeabsichtigt in den Behandlungsbehälter gelangen, die sich bei der Wärmebehandlung zersetzen. Auch kann der Behandlungsbehälter infolge einer falschen Mengenbemessung des Wärmeträgermediums bis zu seinem Oberrand gefüllt sein, so daß infolge der Ausdehnung des Wärmeträgermediums während seiner Erhitzung eine kleine Menge über das Sicherheitsventil austritt. In jedem der angegebenen Fälle entsteht in der Regel zumindest eine Geruchsbelästigung in der Umgebung.

Der Erfindung liegt die Aufgabe zugrunde eine Vorrichtung der einleitend angegebenen Gattung so zu verbessern, daß unter allen voraussehbaren Umständen eine solche Geruchsbelästigung und-/oder die Abgabe flüssiger oder gasförmiger Produkte an die Umgebung verhindert werden.

Diese Aufgabe ist erfindungsgemäß durch die im Kennzeichen des Anspruches 1 angegebenen Merkmale gelöst.

Diese Lösung hat den Vorteil, daß zwischen dem Innenraum des Behandlungsbehälters und der Umgebung eine Verbindung hergestellt wird, die einerseits das Entstehen eines Überdruckes in dem Behandlungsbehälter verhindert, andererseits so beschaffen ist, daß austretende Flüssigkeiten oder Gase nicht ungehindert in die Umgebung entweichen können sondern in dem rohrförmigen Aufsatzaufgefangen bzw. in dem darin enthaltenen Filter absorbiert werden. Hierzu leistet auch der Druckluftvibrator, der in dem Aufsatz untergebracht ist, einen Beitrag, da seine Abluft gleichzeitig als Kühlmedium verwendet wird, so daß zumindest ein erheblicher Teil der etwa aus dem Behälterinneren entweichenden Gase kondensiert wird und als Flüssigkeit aufgefangen werden kann. Außerdem wird durch die Verwendung eines Druckluftvibrators der zusätzliche Vorteil einer Verkürzung der Behandlungsdauer erreicht, da der Druckluftvibrator wesentlich leistungsfähiger als der bei der bekannten Vorrichtung eingesetzte elektromagnetische Vibrator ist.

In den Unteransprüchen sind vorteilhafte Ausführungs- formen und Weiterbildungen der Vorrichtung nach der Erfindung angegeben.

Die Ausführungsform nach Anspruch 2 bezweckt, das Filter von der beträchtlichen Abluftmenge des Druckluftvibrators frei zu halten, so daß das Filter lediglich unter Berücksichtigung der zu absorbierenden Gase und Dämpfe dimensioniert werden muß.

Gegenstand des Anspruches 3 ist eine zweckmäßige Ausführung des Filters.

Im Anspruch 4 ist eine Weiterbildung angegeben, die die Entsorgung auch größerer austretender Flüssigkeitsmengen ermöglicht.

Weitere Ausgestaltungen dieser Weiterbildung sind in den Ansprüchen 5 und 6 genannt.

In der Zeichnung ist die Vorrichtung nach der Erfindung anhand einer beispielsweise gewählten Ausführungsform schematisch vereinfacht dargestellt. Es zeigt :

Figur 1 einen Längsschnitt durch die Vorrichtung und

Figur 2 einen vergrößerten Längsschnitt durch deren rohrförmigen Aufsatz.

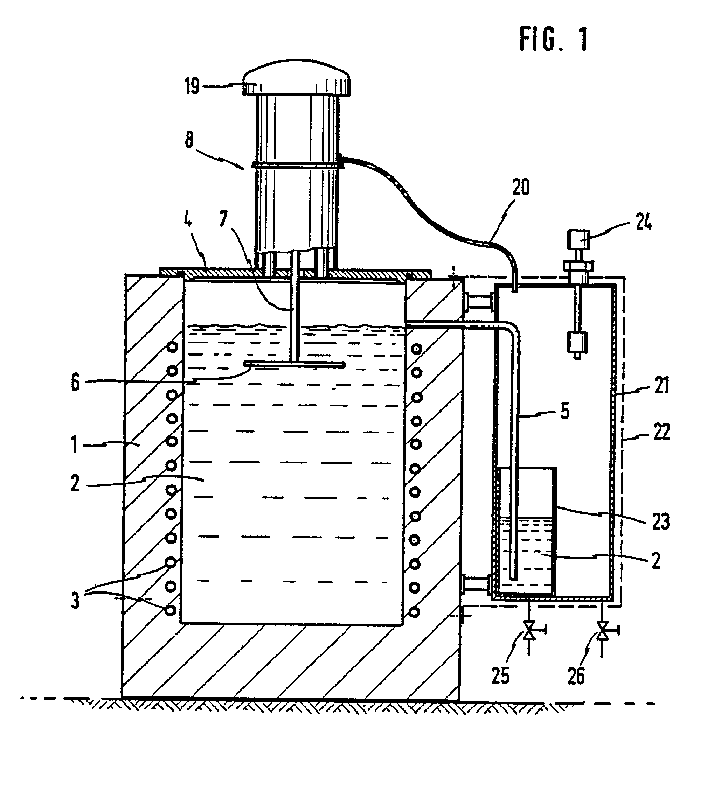

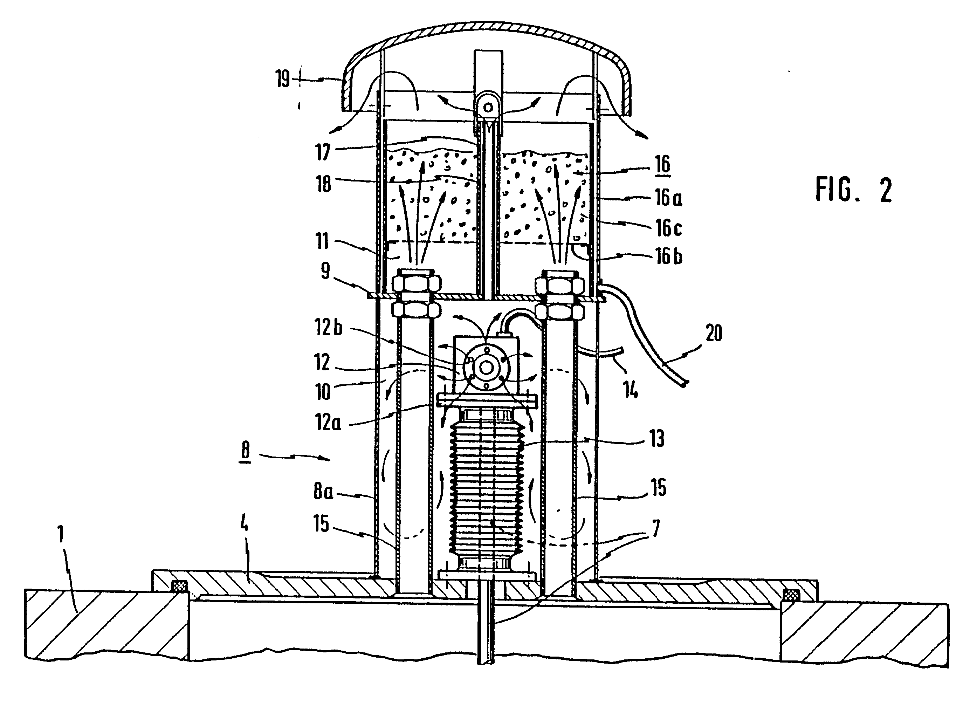

Die Vorrichtung nach den Figuren 1 und 2 besteht aus einem Behandlungsbehälter 1, der mit einem flüssigen Wärmeträgermedium 2 gefüllt ist, das sich durch die schematisierte elektrische Heizeinrichtung 3 bis auf eine vorgewählte Temperatur erhitzen läßt, die bis zu rund 400°C betragen kann.

Der Behandlungsbehälter 1 ist durch einen luftdicht aufsitzenden Deckel 4 verschlossen. Nach Entfernen des Deckels 4 werden in den Behandlungsbehälter 1 diejenigen Teile von Kunststoffverarbeitungsmaschinen, beispielsweise Extruderschnecken, Spritzköpfe und dergleichen eingelegt, an denen Kunststoffreste anhaften. Der Behandlungsbehälter 1 kann hierzu einen korbartigen Einsatz haben (nicht dargestellt). Der Füllstand des flüssigen Wärmeträgermediums 1 sollte nach dem Beschicken mit den zu reinigenden Teilen knapp unterhalb des Überlaufes 5 liegen, damit das oberhalb des Flüssigkeitsspiegels befindliche Luftvolumen nicht unnötig groß wird.

Das Wärmeträgermedium 2 wird mittels der Heizeinrichtung 3 auf eine voreingestellte Temperatur erhitzt, die nicht allzu weit über der Schmelztemperatur des an den zu reinigenden Teilen haftenden Kunststoffs liegt, damit eine Zersetzung des betreffenden Kunststoffes, bei der auch gasförmige Produkte entstehen können, möglichst vermieden wird. Der abgereinigte Kunststoff schwimmt auf und sammelt sich auf der Oberfläche des Wärmeträgermediums 2.

Zur Unterstützung der Reinigungswirkung taucht in das Wärmeträgermedium 2 ein Teller 6, der über eine Stange 7 in Schwingungen versetzt wird. Der Schwingantrieb befindet sich in einem rohrförmigen Aufsatz 8, der auf dem Deckel 4 befestigt ist und im einzelnen in Figur 2 gezeigt ist.

Der rohrförmige Aufsatz 8 besteht aus einem zylindrischen Mantel 8a, der durch eine Platte 9 in eine untere, im wesentlichen abgeschlossene Kammer 10 und eine obere, zur Umgebung offenen Kammer 11 unterteilt ist. In der unteren Kammer 10 ist der Schwingantrieb für die Stange 7 angeordnet. Dieser Schwingantrieb besteht aus einem Druckluftvibrator 12, der mit dem Deckel 4 über einen Faltenbalg 13 aus Edelstahl schwingfähig verbunden ist.

Die Stange 7 ist mit einer Grundplatte 12a des Druckluftvibrators 12 fest verbunden. Der Druckluftvibrator 12, der ein handelsübliches Bauteil sein kann, wird über einen Schlauch 14 mit Druckluft versorgt. Diese Druckluft treibt eine im Inneren des Druckluftvibrators 12 exzentrisch gelagerte bzw. umlaufende Walze oder dergleichen an, deren Unwucht die Schwingungen erzeugt. Die Druckluft tritt über die angedeuteten Bohrungen 12b in die untere Kammer 10 aus.

Die untere Kammer 10 wird von zwei Rohren 15 durchquert, die den Innenraum des Behandlungsbehälters 1 mit der oberen Kammer 11 verbinden. Durch diese Rohre 15 entweichen in dem Behandlungsbehälter 1 etwa entstehende Dämpfe und Gase in die obere Kammer 11 und werden hierbei auf ihrem Weg durch die untere Kammer 10 mittels der aus dem Druckluftvibrator austretenden Druckluft gekühlt, so daß sie größtenteils kondensieren, wobei ein Teil auch über die Rohre 15 zurück in den Behandlungsbehälter 1 fließt. Die verbleibenden, in die obere Kammer 11 austretenden Flüssigkeitströpfchen, Dämpfe und Restgase werden in einem Filter 16 absorbiert, das aus einem herausnehmbar in der oberen Kammer 11 angeordneten Filterkorb 16a mit einem gasdurchlässigen Boden in Form eines Fließes 16b und einer Aktivkohlefüllung 16c besteht. Durch das Filter 16 führt ein Rohr 17 hindurch, das ein Abluftrohr 18 umgibt, über das die Abluft aus der unteren Kammer 10 ungehindert ins Freie entweichen kann. Das obere Ende des rohrförmigen Aufsatzes 8 ist durch eine schirmartige Kappe 19 abgedeckt.

Da sich am Boden der oberen Kammer 11, also auf der Platte 9, gegebenenfalls auch kondensierte Flüssigkeit ansammeln kann, ist dort ein Ablaufschlauch 20 angeschlossen, der gemäß Figur 1 in einen Auffangbehälter 21 mündet, in den des weiteren auch der Überlauf 5 einmündet. Der Auffangbehälter 21 ist seitlich an den Behandlungsbehälter 1 angeschraubt und von einem Schutzgitter 22 umgeben, da sich im Betrieb auch der Auffangbehälter 21 nennenswert erwärmen kann.

Der Auffangbehälter 21 enthält einen zweiten, kleineren, oberseitig offenen Behälter 23, in den das Überlaufrohr 5 mündet und der zur Kühlung von etwa überlaufendem Wärmeträgermedium bis zu einer gewissen Höhe ebenfalls mit Wärmeträgermedium gefüllt ist.

Der Auffangbehälter ist aus Sicherheitsgründen mit einem nach Art eines Schwimmerschalters arbeitenden Füllstandsgrenzwertmelder 24 sowie Ablaßventilen 25 und 26 versehen, von denen das erstere zur Entleerung des kleineren Behälters 23, das letztere zur Entleerung des Auffangbehälters 21 dienen.

## Ansprüche

1. Vorrichtung zum Reinigen solcher Teile von Kunststoffverarbeitungsmaschinen, an denen Kunststoffreste anhaften, bestehend aus einem die Teile aufnehmenden, luftdicht verschließbaren Behandlungsbehälter (1) mit einer Heizvorrichtung (3), die ein flüssiges Wärmeträgermedium auf eine über der Schmelztemperatur des an den zu reinigenden Teilen haftenden Kunststoffs liegende Temperatur erhitzt, und mit einem den Behandlungsbehälter luftdicht abschließenden Deckel (4), der in einem rohrförmigen Aufsatz (8) einen Schwingantrieb enthält, der über eine den Deckel durchquerende Stange (7) einen in das Wärmeträgermedium eintauchenden Teller (6) in Schwingungen versetzt, dadurch gekennzeichnet, daß der rohrförmige Aufsatz (8) durch eine Platte (9) in eine untere, im wesentlichen abgeschlossene Kammer (10) und eine obere, zur Umgebung offene Kammer (11) unterteilt ist, daß der Innenraum des Behälters (1) mit der oberen Kammer (11) über mindestens ein in der Platte (9) mündendes Rohr (15) verbunden ist, daß die obere Kammer (11) ein Filter (16) enthält, und daß in der unteren Kammer (10) als Schwingantrieb ein mit Druckluft betriebener Vibrator (12) mit offener Abluftseite angeordnet ist.

2. Vorrichtung nach Anspruch 1, dadurch gekennzeichnet, daß die Platte (9) eine Abluftöffnung mit anschließendem, durch das Filter (16) hindurchführendem Abluftrohr (18) hat.

3. Vorrichtung nach Anspruch 1 oder 2, dadurch gekennzeichnet, daß das Filter (16) aus einem herausnehmbar in der oberen Kammer angeordneten Filterkorb (16a) mit einem gasdurchlässigen Boden (16b) in Form eines Fließes und einer Aktivkohlefüllung (16c) besteht.

4. Vorrichtung nach einem der Ansprüche 1 bis 3, dadurch gekennzeichnet, daß von dem Bodenbereich der oberen Kammer (11) ein Ablaufschlauch (20) abgeht, der in einen Auffangbehälter (21) mündet.

5. Vorrichtung nach Anspruch 4, dadurch gekennzeichnet, daß der Auffangbehälter (21) einen kleineren, offenen, mit dem Wärmeträgermedium (2) gefüllten Behälter (23) umschließt, der über ein nahe seinem Bodenbereich mündendes Überlaufrohr (5) mit dem Innenraum des Behandlungsbehälters (1) in Höhe dessen maximalen Füllstandes verbunden ist.

6. Vorrichtung nach Anspruch 4 oder 5, dadurch gekennzeichnet, daß der Auffangbehälter (21) mit einem Füllstandsgrenzwertmelder (24) sowie mindestens einem Ablaßventil (25, 26) versehen ist.

## Claims

1. Apparatus for cleaning those parts of plastics processing machines to which plastics residues cling, comprising an air-tightly closable treatment container (1) for accommodating the parts, with a heating means (3) which heats a liquid heat exchange medium to a temperature which is above the melting temperature of the plastics material clinging to the parts to be cleaned, and with a cover (4) which air-tightly closes off the treatment container and which in a tubular attachment (8) contains an oscillating drive which causes oscillating movement of a plate (6) which dips into the heat exchange medium, by way of a bar (7) which passes through the cover, characterised in that the tubular attachment (8) is subdivided by a plate (9) into a lower chamber (10) which is substantially closed off and an upper chamber (11) which is open to the environment, that the interior of the container (1) is connected to the upper chamber (11) by way of at least one pipe (15) which opens in the plate (9), that the upper chamber (11) contains a filter (16), and that a vibrator (12) which is operated by compressed air, with an open exhaust air side, is arranged in the lower chamber (10) as the oscillating drive.

2. Apparatus according to claim 1 characterised in that the plate (9) has an exhaust air opening with adjoining exhaust air pipe (18) which passes through the filter (16).

3. Apparatus according to claim 1 or claim 2 characterised in that the filter comprises a filter basket (16a) which is arranged removably in the upper chamber, with a gas-tranmissive bottom (16b) in the form of a fleece and an activated carbon filling (16c).

4. Apparatus according to one of claims 1 to 3 characterised in that a drain hose (20) goes away from the bottom region of the upper chamber (11) and opens into a catch container (21).

5. Apparatus according to claim 4 characterised in that the catch container (21) encloses a smaller open container (23) which is filled with the heat exchange medium (2) and which is communicated by way of an overflow pipe (5) which opens adjacent its bottom region, to the interior of the treatment container (1), at the height of the maximum filling level thereof.

6. Apparatus according to claim 4 or claim 5 characterised in that the catch container (21) is provided with a filling level limit signalling device (24) and at least one discharge valve (25, 26).

## Revendications

1. Dispositif pour le nettoyage d'éléments de machines de transformation des plastiques auxquels adhèrent des résidus de matière plastique, se composant d'un récipient de traitement (1) qui reçoit ces éléments, peut être fermé de façon étanche à l'air et comporte un dispositif de chauffage (3) qui chauffe un caloporteur liquide à une température se situant au-dessus de la température de fusion de la matière plastique adhérant aux éléments à nettoyer, ainsi qu'un couvercle (4) qui ferme de façon étanche à l'air le récipient de traitement et qui contient, dans un appendice tubulaire (8), un mécanisme d'entraînement en oscillation qui, par l'intermédiaire d'une tige (7) traversant le couvercle, fait osciller un disque (6) plongeant dans le caloporteur, caractérisé en ce que l'appendice tubulaire (8) est subdivisé par une plaque (9) en une chambre inférieure (10) pratiquement fermée et une chambre supérieure (11) en communication avec l'environnement, en ce que le volume intérieur du récipient (1) est raccordé à la chambre supérieure (11) par au moins un tube (15) débouchant au travers de la plaque (9), en ce que la chambre supérieure (11) contient un filtre (16), et en ce qu'il est disposé dans la chambre inférieure (10), en tant que mécanisme d'entraînement en oscillation, un vibreur (12) qui fonctionne à l'air comprimé et dont le côté échappement est ouvert.

2. Dispositif selon la revendication 1, caractérisé en ce que la plaque (9) comporte une ouverture d'échappement d'air à laquelle fait suite un tube d'échappement d'air (18) qui passe à travers le filtre (16).

3. Dispositif selon la revendication 1 ou 2, caractérisé en ce que le filtre (16) est constitue par un panier-filtre (16a) disposé de façon amovible dans la chambre supérieure, avec un fond (16b) perméable aux gaz sous la forme d'un buvard et avec un garnissage de charbon actif (16c).

4. Dispositif selon l'une quelconque des revendications 1 à 3, caractérisé en ce qu'un tuyau flexible d'échappement d'air (20), qui débouche dans un récipient collecteur (21), part de la région du fond de la chambre supérieure (11).

5. Dispositif selon la revendication 4, caractérisé en ce que le récipient collecteur (21) renferme un plus petit récipient ouvert (23) qui est rempli du caloporteur (2) et qui est relié, par un tuyau de trop-plein (5) débouchant dans la région voisine de son fond, au volume intérieur du récipient de traitement (1), à la hauteur du niveau de remplissage maximal de celui-ci.

6. Dispositif selon la revendication 4 ou 5, caractérisé en ce que le récipient collecteur (21) est équipé d'un indicateur de valeur limite de remplissage (24), ainsi que d'au moins une valve de décharge (25, 26).

FIG. 1

FIG. 2

EP 0 287 033 B1